Europäisches Patentamt

European Patent Office

Office européen des brevets

(19)

(11) Veröffentlichungsnummer: **0 096 086
B1**

(12) **EUROPÄISCHE PATENTSCHRIFT**

(45) Veröffentlichungstag der Patentschrift:
04.12.85

(21) Anmeldenummer: 82104904.6

(22) Anmeldetag: 04.06.82

(51) Int. Cl.⁴: **B 41 J 3/16**, G 01 D 15/06

(54) Druckkopf für einen Elektroerosionsdrucker.

(43) Veröffentlichungstag der Anmeldung:
21.12.83 Patentblatt 83/51

(45) Bekanntmachung des Hinweises auf die Patenterteilung:
04.12.85 Patentblatt 85/49

(84) Benannte Vertragsstaaten:
DE FR GB IT

(56) Entgegenhaltungen:
DE - A - 2 530 888

(73) Patentinhaber: IBM DEUTSCHLAND GMBH,
Pascalstrasse 100, D-7000 Stuttgart 80 (DE)
(84) Benannte Vertragsstaaten: DE

(73) Patentinhaber: International Business Machines
Corporation, Old Orchard Road, Armonk, N.Y. 10504 (US)
(84) Benannte Vertragsstaaten: FR GB IT

(72) Erfinder: Hilpert, Fritz, Lichtensteinstrasse 4,
D-7030 Böblingen (DE)
Erfinder: Kohm, Erich, Krebenweg 15, D-7036 Schönaich
(DE)
Erfinder: Rudolph, Volker, Dr., Finkenweg 20,
D-7031 Aidlingen 3 (DE)
Erfinder: Wohnsdorf, Manfred, Genkenstrasse 9,
D-7030 Böblingen (DE)

(74) Vertreter: Blutke, Klaus, Dipl.-Ing., Schönaicher
Strasse 220, D-7030 Böblingen (DE)

## Beschreibung

Die Erfindung betrifft einen Druckkopf für einen Elektroerosionsdrucker mit in Reihen und/oder Spalten in einer Halterung angeordneten Schreibelektroden und mindestens einer am ablaufenden Ende des Druckkopfes angebrachten, geringfügig kürzeren Fühlerelektrode für die Steuerung des Nachführens der Schreibelektroden zum Ausgleich von Abbrand und/oder Abrieb.

In derartigen Elektroerosionsdruckern liegen also die Schreibelektroden des Druckkopfes mit einem vorbestimmten Druck auf einem Aufzeichnungsträger, beispielsweise einem elektrosensitiven Aufzeichnungsträger oder einem metallisierten Aufzeichnungsträger auf. Im Betrieb ergibt sich in Folge der Elastizität des Aufzeichnungsträgers, der außerdem auf einer halbharten Unterlage aufliegt, beim Überfahren des Aufzeichnungsträgers in diesem eine muldenförmige Vertiefung in Längsrichtung des Druckkopfes. Dabei ist naturgemäß zunächst der von den einzelnen Elektroden auf den Aufzeichnungsträger ausgeübte Druck unterschiedlich groß. Schon nach kurzer Betriebszeit haben sich die auflaufenden und ablaufenden Elektroden soweit eingeschliffen, daß sich die gesamte Elektrodenanordnung an die muldenförmige Vertiefung in dem Aufzeichnungsträger mehr oder weniger angepaßt hat. Zu diesem Zeitpunkt sind die von den einzelnen Schreibelektroden auf den Aufzeichnungsträger ausgeübten Flächendrücke etwa gleich groß. Im eigentlichen Druck- oder Schreibbetrieb müssen die Schreibelektroden wegen des im Betrieb erfolgenden Abriebs oder Abbrandes von Zeit zu Zeit nachgestellt werden. Zu diesem Zweck verwendet man relativ lange Schreibelektrodendrähte, so daß diese über eine längere Betriebsdauer immer wieder nachgestellt werden können. Zum Ausgleich des Elektrodenabriebs oder -abbrandes und damit für die Beibehaltung einer möglichst gleichförmigen, gleichbleibenden Schriftqualität, die sich aus einem möglichst gleichbleibenden Druck der Elektroden auf den Aufzeichnungsträger ergibt, verwendet man eine oder mehrere Führungselektroden, die in einer bestimmten räumlichen Beziehung zu den eigentlichen Schreibelektroden angeordnet sind. Im Normalfall wird der Druckkopf in der Weise auf den auf der mittelharten Andruckplatte liegenden Aufzeichnungsträger aufgesetzt, daß die Schreibelektroden und die Fühlerelektroden senkrecht zur Ebene des Aufzeichnungsträgers stehen und sich dabei über den Aufzeichnungsträger auf der mittelharten Andruckplatte abstützen.

Mit Hilfe der Fühlerelektrode, die etwas kürzer ist als die Schreibelektroden, wird festgestellt, ob die Elektroden nachgestellt werden müssen. Das heißt, die am ablaufenden Ende des Druckkopfes etwas versetzt angeordnete Fühlerelektrode liegt praktisch nur ganz leicht an der nicht ausgebrannten Seite der durch den Druck der Schreibelektroden sich bildenden länglichen muldenförmigen Vertiefung an. Die Fühlerelektrode, die nun auf der seitlich ansteigenden Fläche der muldenförmigen Vertiefung leicht aufsetzt, schleift sich dann, wenn auch in viel geringerem Maße als die Schreibelektroden, und zwar etwa halbmondförmig ab. Das kommt daher, daß der Aufzeichnungsträger Unebenheiten, Einschlüsse und dergleichen aufweist, mit denen die Fühlerelektrode kurzzeitig in Berührung kommen kann. Diese Kontaktberührungen dürfen jedoch noch keinen Nachstellvorgang auslösen. Erst wenn die Anzahl und/oder Amplituden der bei Berührung zwischen Fühlerelektrode und Aufzeichnungsträger auftretenden Stromimpulse vorgegebene Grenzwerte überschreiten, soll ein Elektrodennachschub erfolgen.

Die Tatsache jedoch, daß die Fühlerelektrode auf der ansteigenden Seitenfläche der muldenförmigen Vertiefung nur mit einer Randzone aufliegt, erzeugt zu früh ein Signal, das anzeigt, daß die Elektroden nachgeschoben werden müssen. Werden die Schreibelektroden aber zu früh nachgeschoben, dann wird dadurch aber durch die Elektroden ein erhöhter Druck auf den Aufzeichnungsträger und die halbharte Unterlage ausgeübt, wodurch sich die muldenförmige Vertiefung weiter vertieft. Dies hat zur Folge, daß die Fühlerelektrode erneut in Kontaktberührung mit der nunmehr steiler gewordenen Seitenfläche der muldenförmigen Vertiefung kommt und ein weiteres Nachführen oder Nachschieben der Schreibelektrodendrähte bewirkt. Dies kann in ganz kurzer Zeit zur Zerstörung des Aufzeichnungsträgers und/oder der Elektroden führen.

Der Erfindung liegt also die Aufgabe zugrunde, eine Elektrodenanordnung der eingangs genannten Art zu schaffen, durch die derartige regelungsbedingte Instabilitäten weitestgehend unterdrückt werden können, wobei gleichzeitig in einer so vereinfachten Regelung der durch den Druckkopf ausgeübte Druck auf den Aufzeichnungsträger im wesentlichen gleichförmig gehalten wird.

Dies wird erfindungsgemäß dadurch erreicht, daß mindestens die Fühlerelektrode (7) etwa in Richtung der mittleren Flächennormalen der unbeschriebenen Seitenfläche der muldenförmigen Vertiefung schräg gestellt ist.

Weitere Ausgestaltungen der Erfindung sind den weiteren Patentansprüchen im einzelnen zu entnehmen.

Die Erfindung wird nunmehr anhand eines Ausführungsbeispiels in Verbindung mit den beigefügten Zeichnungen im einzelnen näher erläutert.

In den Zeichnungen zeigt:

Fig. 1 eine schematische Ansicht eines Aufzeichnungsträgerbandes mit einem darüberliegenden Schreibkopf,

Fig. 2 eine Ansicht der Fig. 1 in Richtung des Pfeiles A in Fig. 1,

Fig. 3 rein schematisch den Schreibkopf und die im Betrieb durch ihn hervorgerufene muldenförmige Vertiefung,

Fig. 4 eine Ansicht der Fig. 3 in Richtung des Pfeiles B in Fig. 3,

Fig. 5 eine vergrößerte Ansicht des ausgezogenen Teils in Fig. 4 und

Fig. 6 eine vergrößerte Ansicht des in Fig. 4 gestrichelten Teils.

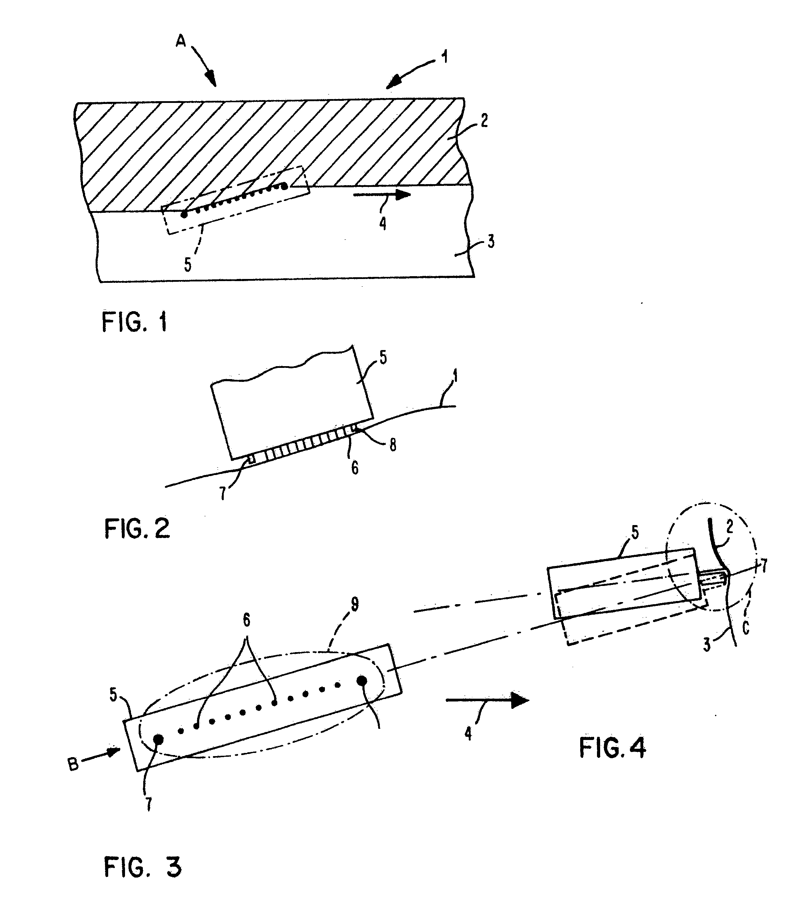

Zunächst sei einmal darauf hingewiesen, daß sämtliche Darstellungen auf gar keinen Fall in irgendeiner Form als maßstäblich angesehen werden können. Fig. 1 zeigt zunächst einen bandförmigen Aufzeichnungsträger 1 mit einer elektrosensitiven Aufzeichnungsoberfläche. Der Aufzeichnungsträger kann beispielsweise ein Metallregistrierpapier sein, d. h. ein mit einer dünnen Aluminiumschicht überzogenes Substrat, wobei ggf. unter der Aluminiumschicht noch eine Lackschicht vorgesehen sein kann. Auf dem Aufzeichnungsträger ist rein schematisch eine bereits bedruckte, also dunkel oder schwarz gefärbte Schicht 2 und eine noch nicht bedruckte, also helle Schicht 3 zu erkennen. Die Schreibrichtung ist durch einen Pfeil 4 angedeutet. Ferner erkennt man einen stilisiert dargestellten Druckkopf 5, in diesem Fall, stark vereinfacht, nur die Elektrodenhalterung selbst. Wie man aus der Fig. 2 etwas deutlicher erkennt, weist der Druckkopf 5 an seinem unteren Ende eine Reihe von Druckdrähten oder Schreibelektroden 6 auf, sowie am ablaufenden Ende eine Fühlerelektrode 7 und vorzugsweise auch am auflaufenden Ende eine Fühlerelektrode 8.

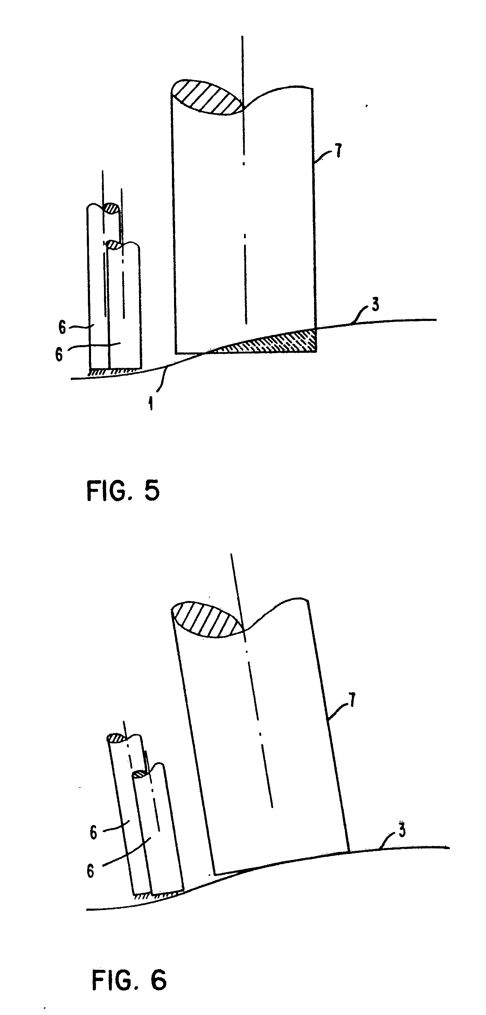

Wie bereits in der Beschreibungseinleitung ausführlich dargelegt, bewirkt der durch den Druckkopf und seine Schreibelektroden auf den Aufzeichnungsträger ausgeübte Druck eine Art muldenförmige Vertiefung 9 auf dem Aufzeichnungsträger, die rein schematisch durch eine gestrichelte Linie angedeutet ist. Die Schreibrichtung ist wieder durch den Pfeil 4 gekennzeichnet. Wie man aus der Ansicht der Fig. 4, die in Fig. 3 in Richtung des Pfeiles B zu sehen ist und insbesondere aber aus den Fig. 5 und 6 erkennt, liegt die Fühlerelektrode, wenn sie senkrecht gestellt ist, zunächst mit ihrer äußeren rechten Kante ganz leicht an dem unbeschriebenen Teil 3 des Aufzeichnungsträgerbandes 1 an. Prinzipiell soll ja die Fühlerelektrode zunächst keine Kontaktberührung mit dem Aufzeichnungsträger haben. Wie bereits in der Beschreibungseinleitung erläutert, ergibt sich durch die Oberflächenrauhigkeit des Aufzeichnungsträgers doch ein geringfügiger Abrieb auch der Fühlerelektrode, so daß diese sich halbmondförmig abschleift. Dies führt aber, wie bereits erläutert, zu Regelvorgängen, die dem tatsächlichen Abbrand oder Abrieb der Schreibelektroden 6 nicht entspricht. Die durch die Erfindung vorgeschlagene Lösung zeigt daher Fig. 6. An sich genügt es, zunächst nur die Fühlerelektrode 7 geringfügig schräg zu stellen. Es hat sich jedoch als vorteilhaft erwiesen, nicht die Elektroden selbst schräg zu stellen, sondern vorzugsweise die die Elektroden tragende Halterung. Auf diese Weise wird eine optimale Vorschubsteuerung sichergestellt, da nunmehr der Gleitwinkel und die Tiefe der Deformation und damit die Profilhöhe durch möglichst senkrechtes Abtasten der seitlichen Deformationsflanken erfolgt. Es ist dabei nicht unbedingt erforderlich, daß Schreib- und Fühlerelektroden um den gleichen Winkel gegen die Flächennormale des ungestörten Aufzeichnungsträgers geneigt sein müssen.

Durch diese Maßnahme wird das Abfühlen durch die Fühlerelektrode zum Einleiten des Elektrodenvorschubs von der Art des Druckmusters unabhängig und wird gegen Schwankungen des Anpreßdruckes unempfindlicher. Gleichzeitig werden die beim Schreiben entstehenden Rückstände aus Abbrand oder Abrieb wesentlich besser aus der Deformationszone, d. h. der muldenförmigen Vertiefung abgeführt und man erreicht außerdem, was besonders günstig ist, einen wesentlich gleichmäßigeren und damit formgünstigeren Elektrodenabrieb, d. h., die so gefürchtete Bildung von schneidenförmigen Elektroden wird dadurch im wesentlichen beseitigt.

## Patentansprüche

1. Druckkopf (5) für einen Elektroerosionsdrukker mit in Reihen und/oder Spaltenanordnung in einer Halterung angebrachten Schreibelektroden (6) und mindestens einer am ablaufenden Ende des Druckkopfes (5) angebrachten geringfügig kürzeren Fühlerelektrode (7) für die Steuerung des Nachführens der Schreibelektroden (6) zum Ausgleich von Abbrand und/oder Abrieb, dadurch gekennzeichnet, daß mindestens die Fühlerelektrode (7) etwa in Richtung der mittleren Flächennormalen der unbeschriebenen Seitenfläche (3) der muldenförmigen Vertiefung (6) schräg gestellt ist.

2. Druckkopf nach Anspruch 1, dadurch gekennzeichnet, daß mindestens die Fühlerelektrode (7) um einen Winkel zwischen etwa 2° und etwa 8° gegen die Flächennormale des ungestörten Aufzeichnungsträgers (1) in einer Richtung quer zur Längsrichtung der Schreibelektrodenreihe schräg gestellt ist.

3. Druckkopf nach Anspruch 2, dadurch gekennzeichnet, daß die Fühlerelektrode (7) um etwa 3 bis 5° schräg gestellt ist.

4. Druckkopf nach Anspruch 1, dadurch gekennzeichnet, daß auch alle Schreibelektroden (6) entsprechend schräg gestellt sind.

5. Druckkopf nach Anspruch 1, dadurch gekennzeichnet, daß alle Schreibelektroden (6) gleichmäßig schräg gestellt sind.

6. Druckkopf nach Anspruch 1 oder 5, dadurch gekennzeichnet, daß die Fühlerelektrode (7) und die Schreibelektroden (6) um den gleichen Winkel schräg gestellt sind.

7. Druckkopf nach Anspruch 1, dadurch gekennzeichnet, daß die Schreibelektroden (6) und die Fühlerelektrode(n) (7, 8) enthaltende Halterung selbst auch schräg gestellt ist.

8. Druckkopf nach Anspruch 1, dadurch gekennzeichnet, daß auch am auflaufenden Ende eine Fühlerelektrode (8) vorgesehen ist.

## Claims

1. Print head (5) for an electroerosion printer, with print electrodes (6) arranged in rows and/or columns in a holder, and with at least one sensor electrode (7) that is arranged at the trailing edge of the print head (5) and slightly shorter, to control the feeding of the print electrodes (6) to compensate their burning-off and/or abrasion, characterized in that at least the sensor electrode (7) is inclined approximately in the direction of the medium normal to the surface of the unprinted lateral surface (3) of the through-like depression (9).

2. Print head as claimed in claim 1, characterized in that at least the sensor electrode (7) is inclined at an angle between approximately 2° and approximately 8° against the normal to the surface of the undisturbed record carrier (1), in a direction transversal to the longitudinal direction of the row of print electrodes.

3. Print head as claimed in claim 2, characterized in that the sensor electrode (7) is inclined by approximately 3 to 5°.

4. Print head as claimed in claim 1, characterized in that all the print electrodes (6) are also inclined accordingly.

5. Print head as claimed in claim 1, characterized in that all print electrodes (6) are uniformly inclined.

6. Print head as claimed in any one of claims 1 or 5, characterized in that the sensor electrode (7) and the print electrodes (6) are inclined at the same angle.

7. Print head as claimed in claim 1, characterized in that the holder containing the print electrodes (6) and the sensor electrode(s) (7, 8) is itself also inclined.

8. Print head as claimed in claim 1, characterized in that a sensor electrode (8) is provides also at the leading edge.

## Revendications

1. Tête d'impression (5) pour une imprimante fonctionnant par électro-érosion, avec des électrodes d'écriture (6) en lignes et/ou en colonnes dans un support et au moins une électrode-sonde (7) légèrement plus courte fixée à l'extrêmité inférieure de la tête d'impression (5) pour la commande de l'avance des électrodes d'écriture (6) aux fins de compensation de l'usure par brûlage et/ou par frottement, caractérisée par le fait qu'au moins l'électrode-sonde (7) est placée en biais à peu près en direction de la normale moyenne à la surface de la face latérale non écrite (3) du creux en forme d'auge (9).

2. Tête d'impression suivant la revendication 1, caractérisée par le fait qu'au moins l'électrode-sonde (7) est inclinée d'un angle compris entre environ 2° et environ 8° par rapport à la normale à la surface du support d'image (1) non dérangé dans une direction transversale par rapport à la direction longitudinale de la ligne des électrodes d'écriture.

3. Tête d'impression suivant la revendication 2, caractérisée par le fait que l'électrode-sonde (7) est placée en biais suivant un angle d'environ 3 à 5°.

4. Tête d'impression suivant la revendication 1, caractérisée par le fait que toutes les électrodes d'écriture (6) sont, elles aussi, inclinées de façon appropriée.

5. Tête d'impression suivant la revendication 1, caractérisée par le fait que toutes les électrodes d'écriture (6) sont disposées de façon uniformément inclinée.

6. Tête d'impression suivant la revendication 1 ou 5, caractérisée par le fait que l'électrode-sonde (7) et les électrodes d'écriture (6) sont disposées avec des inclinaisons du même angle.

7. Tête d'impression suivant la revendication 1, caractérisée par le fait que le dispositif qui porte les électrodes d'écriture (6) et l'électrode-sonde (7) ou les électrodes-sondes (7, 8) est lui-même disposé en bais.

8. Tête d'impression suivant la revendication 1, caractérisée par le fait qu'il y a aussi une électrode-sonde (8) à l'extrêmité supérieure.

FIG. 1

FIG. 2

FIG. 3

FIG. 4

FIG. 5

FIG. 6